(19) Europäisches Patentamt
European Patent Office
Office européen des brevets

(11) **EP 4 624 868 A1**

(12) **EUROPEAN PATENT APPLICATION**

(43) Date of publication:
**01.10.2025 Bulletin 2025/40**

(21) Application number: **25163706.2**

(22) Date of filing: **14.03.2025**

(51) International Patent Classification (IPC):
**G01C 19/5776** (2012.01)　　**G01C 25/00** (2006.01)
**G01C 19/56** (2012.01)

(52) Cooperative Patent Classification (CPC):
**G01C 19/5776; G01C 19/56; G01C 25/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2024 US 202418622535**

(71) Applicant: **STMicroelectronics International N.V.
1228 Plan-les-Ouates, Geneva (CH)**

(72) Inventors:
• **QUARTIROLI, Matteo
27012 CERTOSA DI PAVIA (PV) (IT)**
• **MAGNANI, Alessandro
20152 MILANO (IT)**
• **MECCHIA, Alessandro
20871 VIMERCATE (MB) (IT)**

(74) Representative: **Studio Torta S.p.A.
Via Viotti, 9
10121 Torino (IT)**

(54) **GYROSCOPE QUADRATURE AND PHASE ERROR ESTIMATION AND CORRECTION**

(57)　　A method includes generating a signal using a gyroscope. The generated signal includes a Coriolis component and a quadrature component. The signal generated by the gyroscope is demodulated using a feedback loop, generating a demodulated signal. The demodulating includes generating an in-phase demodulation signal and demodulating the signal generated by the gyroscope using the generated in-phase demodulation signal. The in-phase demodulation signal includes a phase-modulation signal and the demodulated signal includes a frequency component corresponding to the phase-modulation signal. An amplitude of the frequency component corresponding to the phase-modulation signal in the demodulated signal is estimated, and a feedback signal is generated based on the estimated amplitude of the frequency component corresponding to the phase-modulation signal. Compensation for the quadrature component of the signal generated by the gyroscope is applied based on the feedback signal. An output signal is generated based on the demodulated signal.

Fig. 10

**Description**

BACKGROUND

Technical Field

The present disclosure generally relates to gyroscopes, for example, gyroscopes used in portable electronic devices, automotive applications, etc.

Description of the Related Art

Electronic devices, such as smartphones, laptops, smart bands, smart watches, smart pens, automotive navigation and control systems, etc., often use position, orientation, gesture, motion, location and other information to facilitate the control and operation of the devices or vehicles. The electronic devices or vehicles may typically include multiple sensors, such as GPS systems, accelerometers, gyroscopes, pressure sensors, etc., to sense such position, gesture, motion, location and other information.

Gyroscopes generate an output signal which typically includes a Coriolis component and a quadrature component. The Coriolis component is the angular rate motion component of the gyroscope output, which is the desired information being measured by the gyroscope. The quadrature component is an unwanted component of the gyroscope output related to geometric non-idealities of the gyroscope.

BRIEF SUMMARY

The invention relates to a device, a system, a method and a computer-readable medium, as defined in the annexed claims.

In an embodiment, a device comprises a gyroscope and processing circuitry coupled to the gyroscope. The gyroscope, in operation, generates a signal, the generated signal including a Coriolis component and a quadrature component. The processing circuitry, in operation demodulates the signal generated by the gyroscope using a feedback loop, generating a demodulated signal. The demodulating includes generating an in-phase demodulation signal, demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal, estimating an amplitude of the frequency component corresponding to the phase-modulation signal in the demodulated signal, and generating a feedback signal based on the estimated amplitude of the frequency component corresponding to the phase-modulation signal in the demodulated signal. The processing circuitry compensates for the quadrature component of the signal generated by the gyroscope using the feedback signal, and generates an output signal based on the demodulated signal.

In an embodiment, a system comprises a host processor and an integrated circuit coupled to the host processor. The integrated circuit includes: a gyroscope, which, in operation, generates a signal, the generated signal including a Coriolis component and a quadrature component; and processing circuitry coupled to the gyroscope. The processing circuitry, in operation demodulates the signal generated by the gyroscope using a feedback loop, generating a demodulated signal. The demodulating includes: generating an in-phase demodulation signal; demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal; estimating an amplitude of the frequency component corresponding to the phase-modulation signal in the demodulated signal; and generating a feedback signal based on the estimated amplitude of the frequency component corresponding to the phase-modulation signal in the demodulated signal. The processing circuitry compensates for the quadrature component of the signal generated by the gyroscope using the feedback signal, and generates an output signal based on the demodulated signal.

In an embodiment, a method includes generating a signal using a gyroscope. The generated signal includes a Coriolis component and a quadrature component. The signal generated by the gyroscope is demodulated using a feedback loop, generating a demodulated signal. The demodulating includes generating an in-phase demodulation signal and demodulating the signal generated by the gyroscope using the generated in-phase demodulation signal. The in-phase demodulation signal includes a phase-modulation signal and the demodulated signal includes a frequency component corresponding to the phase-modulation signal. An amplitude of the frequency component corresponding to the phase-modulation signal in the demodulated signal is estimated, and a feedback signal is generated based on the estimated amplitude of the frequency component corresponding to the phase-modulation signal. Compensation for the quadrature component of the signal generated by the gyroscope is applied based on the feedback signal. An output signal is generated based on the demodulated signal.

In an embodiment, a non-transitory computer-readable medium's contents configure processing circuitry to perform a method, the method comprising: demodulating a signal generated by a gyroscope using a feedback loop, generating a demodulated signal, the signal generated by the gyroscope including a Coriolis component and a quadrature component, wherein the demodulating includes: generating an in-phase demodulation signal; and demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal; estimating an amplitude of the frequency component in the demodulated signal corresponding to the phase-modulation signal; and generating a feedback signal based on the estimated amplitude of the frequency component in the demodulated signal corresponding to the phase-modulation signal; compensating for the quadrature component of the signal generated by the gyroscope using the feedback signal; and generating an output signal based on the demodulated signal.

BRIEF DESCRIPTION OF THE SEVERAL VIEWS OF THE DRAWINGS

One or more embodiments are described hereinafter with reference to the accompanying drawings.

Figure 1 is a functional block diagram of an embodiment of an electronic device or system.
Figure 2 is a conceptual diagram illustrating demodulation of a signal generated by a gyroscope.
Figure 3 is conceptual diagram illustrating using an estimated quadrature amplitude to compensate for the quadrature using mechanical techniques.
Figure 4 is conceptual diagram illustrating using an in-quadrature demodulation processing chain to compensate for the quadrature using mechanical techniques.
Figure 5 is a conceptual diagram illustrating an example of using an in-phase demodulation signal including a phase modulation signal component to demodulate a gyroscope signal, which introduces a frequency component at a determined frequency in the demodulated output.
Figure 6 is a conceptual diagram illustrating an example of a signal introduced in a demodulated signal output at a determined frequency, the introduced signal having an amplitude proportional to the quadrature amplitude.
Figure 7 is a conceptual diagram illustrating using a measured amplitude of a signal introduced into the demodulated output to estimate a quadrature in a gyroscope signal.
Figure 8 is functional block diagram of a device or system to compensate for quadrature in a gyroscope signal according to an embodiment.
Figure 9 is a conceptual diagram illustrating example advantages of a quadrature compensation system according to an embodiment.
Figure 10 is a flow diagram illustrating an embodiment of a method of compensating for quadrature and phase error of a gyroscope.

DETAILED DESCRIPTION

The following description, along with the accompanying drawings, sets forth certain specific details in order to provide a thorough understanding of various disclosed embodiments. However, one skilled in the relevant art will recognize that the disclosed embodiments can be practiced in various combinations, with or without one or more of these specific details, or with other methods, components, devices, materials, etc. In other instances, well-known structures or components that are associated with the environment of the present disclosure, including but not limited to interfaces, power supplies, accelerometers, gyroscopes, physical component layout, processing circuitry, demodulators, lookup tables, etc., have not been shown or described in order to avoid unnecessarily obscuring descriptions of the embodiments. Additionally, the various embodiments can be methods, systems, devices, computer program products, etc.

Throughout the specification, claims, and drawings, the following terms take the meaning associated herein, unless the context indicates otherwise. The term "herein" refers to the specification, claims, and drawings associated with the current application. The phrases "in one embodiment," "in another embodiment," "in various embodiments," "in some embodiments," "in other embodiments," and other variations thereof refer to one or more features, structures, functions, limitations, or characteristics of the present disclosure, and are not limited to the same or different embodiments unless the context indicates otherwise. As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context indicates otherwise. In addition, throughout the specification, the meaning of "a," "an," and "the" include singular and plural references.

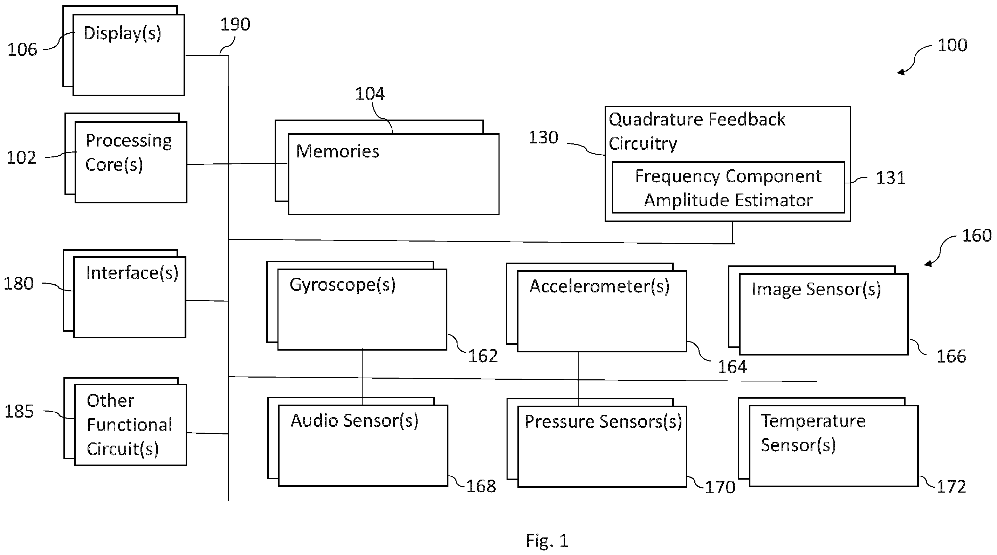

Figure 1 is a functional block diagram of an embodiment of an electronic device or system 100. The system 100 comprises one or more processing cores or circuits 102. The processing cores 102 comprise, for example, one or more processors, a state machine, a microprocessor, a programmable logic circuit, discrete circuitry, logic gates, registers, etc., and various combinations thereof. The processing core(s) controls overall operation of the system 100, execution of application programs by the system 100 (e.g., programs which use position, orientation, gesture, motion, gravity vectors, tilt angles, location and other information, and various combinations thereof, to perform various functions, such as generating control signals related to the operation of a motor vehicle, etc.), etc.

The system 100 includes one or more memories 104, such as one or more volatile and/or non-volatile memories which store, for example, all or part of instructions and data related to control of the system 100, applications and operations performed by the system 100, etc. One or more of the memories 104 include a memory array, which, in operation, can be shared by one or more processes executed by the system 100. The system 100 also includes one or more displays 106, which display information to a user, receive user-input, etc.

The system 100 includes one or more sensors or sensor arrays 160, as illustrated, one or more gyroscopes 162, one or more accelerometers 164, one or more image sensors 166, one or more audio sensors 168, one or more pressure sensors 170, one or more temperature sensors 172, etc. The system 100 also includes one or more interfaces 180 (e.g., wireless communication interfaces, wired communication interfaces, user-input devices, etc., and various combinations thereof), other functional circuits 185, which include antennas, power supplies, one or more built-in self-test (BIST) circuits, etc., and a main bus system 190. The main bus system 190 includes one or more data, address, power and/or control buses coupled to the various components of the system 100.

The one or more gyroscopes 162, in operation, generate rotational data, and provide an output in the form of motion sensor signals indicating a rotational velocity measurements vector, which indicates a rotational velocity with respect to, for example, three axes of movement. The one or more gyroscopes 162 comprise a micro-electromechanical system (MEMS) device that measures the rate of rotation of an object around one or more axis.

The one or more accelerometers 164, in operation, generate acceleration data, and typically provide an output in the form of motion sensor signals indicating an acceleration measurements vector indicating acceleration along, for example, three axes of movement. The one or more accelerometers 164 comprise a MEMS device that measures the acceleration of an object along one or more axes.

The one or more image sensors 166, in operation, generate digital or analog signals based on optical images. The image sensors 166 include a photosensitive element which generates a signal in response to light waves, and provide digital signal in the form of pixel values.

The one or more audio sensors 168, in operation, generate digital or analog signals based on sound waves. The audio sensors 168 comprise a MEMS device which converts sound waves into electrical signals.

The one or more pressure sensors 170, in operation, generate digital or analog signals based on an ambient pressure. The pressure sensors 170 comprise a MEMS device, such as a capacitive sensor, a piezoresistive sensor, etc., which converts an indication of pressure or a pressure change into electrical signals.

The one or more temperature sensors 172, in operation, generate digital or analog signals based on an ambient temperature, temperature differences, etc. The temperature sensors 172 comprise for example a resistance temperature detector, a semiconductor detector, a junction detector, etc., which converts an indication of a temperature or a temperature change into electrical signals.

The one or more gyroscopes have a quadrature. For example, the drive and sense nodes of a gyroscope are designed to be orthogonal to each other. However, misalignments can be introduced during the manufacturing process, and the alignment or mis-alignment can drift in time or vary under different operating conditions (e.g., due to temperature, mechanical stress, humidity, etc.). The quadrature in a gyroscope can have a significant impact on the accuracy of classifications (e.g., user activity classifications), control or other signals generated based on the rotational signals of a gyroscope (e.g., control signals generated by the processor 102 to control operation of the device based on the rotation signals), and can deteriorate bias stability or in general Allan variance, etc.

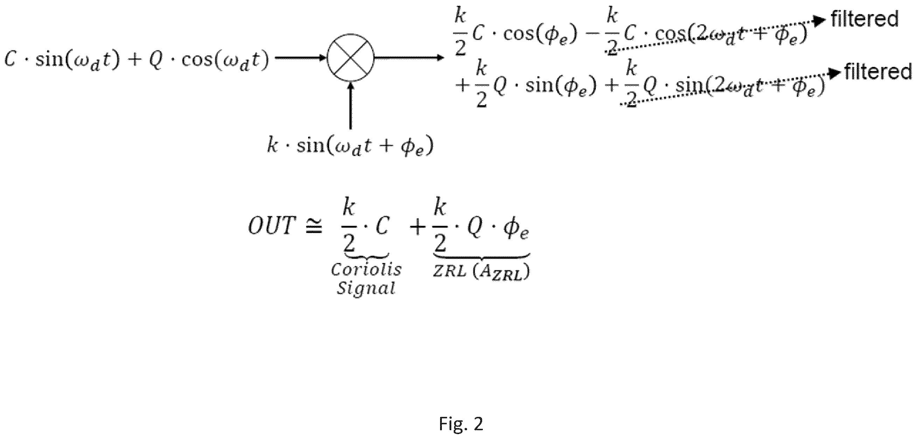

Figure 2 is a conceptual diagram illustrating a method of demodulating an output signal generated by a gyroscope. The signal output by the gyroscope includes a Coriolis component, which is an angular rate motion component of the gyroscope output. The Coriolis component is the information or physical component the gyroscope is intended to measure. The signal output by the gyroscope also includes a quadrature component which is an unwanted component of the gyroscope output signal related to geometric non-idealities of the gyroscope.

Conceptually, the signal output by the gyroscope is represented in Figure 2 as:

$$C \cdot \sin(\omega_d t) + Q \cdot \cos(\omega_d t),$$

where $C$ is an amplitude of the Coriolis component, $Q$ is an amplitude of the quadrature component, and $\omega_d$ is the drive angular frequency of the gyroscope. The signal output by the gyroscope is demodulated using a signal in-phase with the Coriolis component, represented in Figure 2 as:

$$k \cdot \sin(\omega_d t + \phi_e),$$

where $k$ is a constant and $\phi_e$ represents a phase error. The harmonics of the demodulated signal are typically filtered out. Assuming the phase error $\phi_e$ is small, the demodulated and filtered signal output by the gyroscope is represented as

$$(k/2) \cdot C + (k/2) \cdot Q \cdot \phi_e,$$

where $(k/2) \cdot C$ represents a Coriolis component and $(k/2) \cdot Q \cdot \phi_e$ represents a quadrature component of the demodulated and filtered signal. The quadrature amplitude $Q$ and the phase error $\phi_e$ is estimated and used to compensate for the quadrature and phase error in the output of the gyroscope.

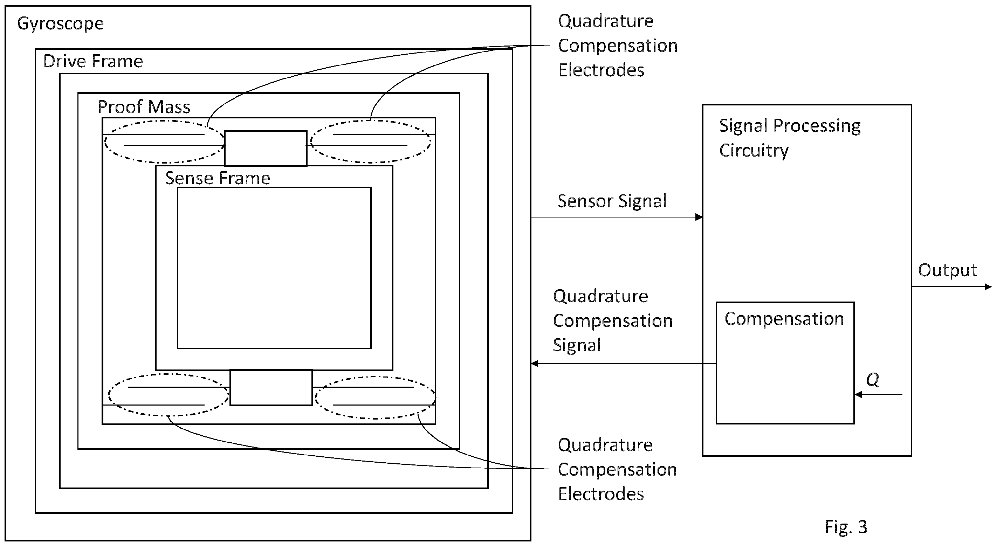

For example, the magnitude of a quadrature amplitude $Q$ or a parameter indicative of the magnitude of the quadrature amplitude $Q$ is estimated and employed in operation to mechanically or electrically compensate for the quadrature. Figure 3 is a conceptual diagram illustrating a method of using an estimated quadrature amplitude $Q$ to generate a compensation signal to mechanically compensate for the quadrature. Signal processing circuitry receives a sensor signal from a gyroscope and generates a compensation signal based on the received signal and a stored or currently estimated value of the quadrature amplitude $Q$ to generate a quadrature compensation signal. As illustrated, the compensation signal is generated based on the measured or estimated parameter indicative of the quadrature amplitude $Q$. The compensation signal is applied to electrodes embedded in the gyroscope to compensation for the quadrature. Instead of using embedded electrodes, some systems can electrically compensate for the quadrature in the drive and output signals, or may employ various combinations of mechanical and electrical compensation schemes.

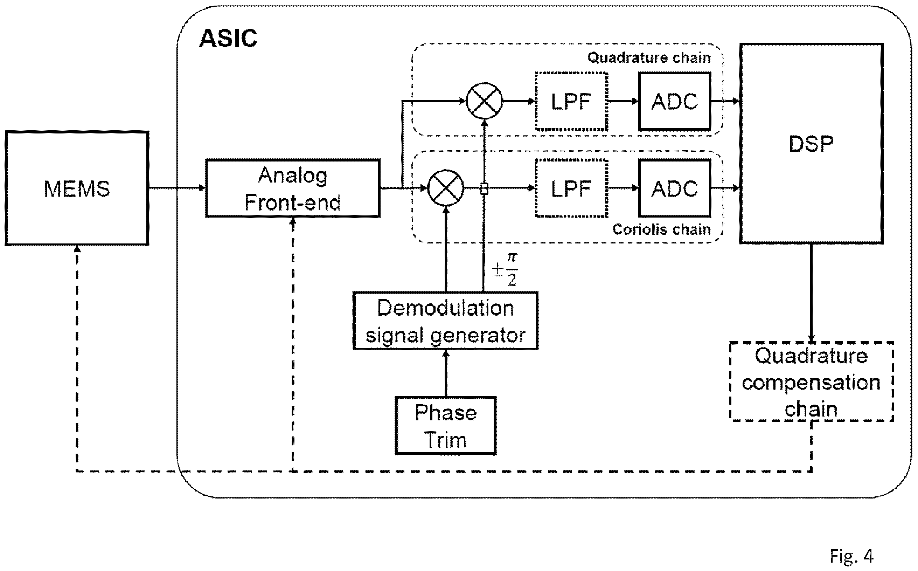

Figure 4 is a conceptual diagram illustrating a method of using a quadrature amplitude estimated at run time using a quadrature demodulation chain in addition to a Coriolis demodulation chain. For each axis of a multi-axis gyroscope, a dedicated quadrature signal processing path receives a sensor motion signal (e.g., a rotational signal) for the axis, demodulates the signal in-quadrature, and based on the demodulated quadrature signals, for the axis, generates a corresponding quadrature compensation signal for the axis. For a typical 3-axis gyroscope, three dedicated quadrature signal paths are required in order to continuously track the quadrature in real time for all axes. Alternatively, a time-interleaved approach can be applied to reduce the circuitry requirements (e.g., one of the quadrature demodulation chains is also shared with a temperature sensor (see temperature sensor 172 of Figure 1)), but using a time-interleaved approach means that the quadrature is not tracked in real time, at least not for all axes. Instead of using embedded electrodes, some systems electrically compensate for the quadrature in the drive and output signals, or combinations thereof.

Such techniques, however, use static parameter values based on measurements at the test and trim phase, or periodic off-line measurements, and do not sufficiently account for the drift or variance in the quadrature in real world conditions. Conventional approaches that track changes in the quadrature in real time have significant processing requirements in terms of area and power because a separate quadrature processing chain is needed to estimate the quadrature amplitude for each axis.

The inventors noticed that, after demodulation in a Coriolis demodulation chain, the second and higher harmonic components of the demodulated motion signal contain information indicative of the quadrature amplitude. These harmonic components, however, are located in a noisy part of the frequency spectrum of the motion signal, and thus conventionally these harmonic components are filtered out of the signal and discarded. The noise also makes it difficult to extract the information indicative of the quadrature amplitude from the demodulated motion signal.

The inventors also have realized that, by applying or including a phase modulation signal in an in-phase demodulation signal used to demodulate the motion signal, a frequency component can be introduced into the demodulated signal output which has an amplitude proportional to the quadrature amplitude and which is located in a position in the frequency band where it is easy to extract the information indicative of the quadrature amplitude.

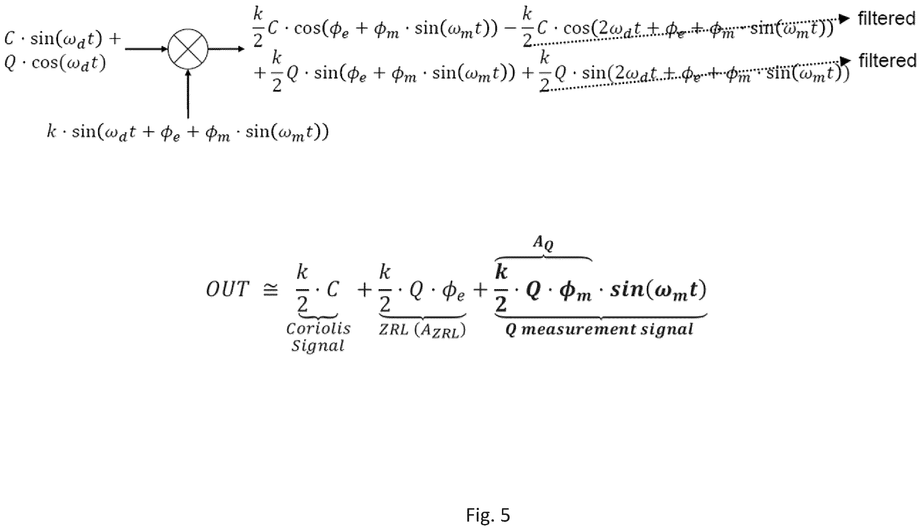

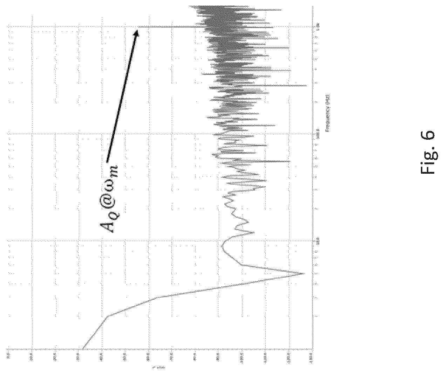

Figure 5 is a conceptual diagram illustrating applying a phase modulation signal with a known frequency $\omega_m$ and a known amplitude $\phi_m$ to an in-phase demodulation signal to introduce a frequency component $A_Q @ \omega_m$ in the demodulated signal generated by the demodulation process. Assuming the phase modulation amplitude $\phi_m$ and the phase error $\phi_e$ are small, the output OUT of the demodulator after analog-to-digital conversion is a sum of a Coriolis signal, a zero level signal, and the introduced frequency component signal *Qmeasurement* at the determined frequency $\omega_m$. The signal $A_Q @ \omega_m$ or *Qmeasurement* can be isolated and used to measure an indication of the quadrature amplitude $A_Q$. Figure 6 is a conceptual diagram illustrating an introduced frequency component $A_Q @ \omega_m$ of a gyroscope signal demodulated in a Coriolis demodulation chain, with the frequency component $A_Q @ \omega_m$ being at a determined frequency $\omega_m$ and having an amplitude $A_Q$ proportional to the quadrature. As shown in Figure 6, the introduced frequency component *Qmeasurement* is at a frequency $\omega_m$ where it is easy to distinguish the introduced frequency component from noise. As shown and described, the frequency of the phase modulation signal and of the introduced frequency component are the same frequency. In some embodiments, the frequency of the phase modulation signal and of the introduced frequency component may be different. For example, the frequency of the introduced frequency component may be a function of the frequency of the phase modulation signal (e.g., a multiple).

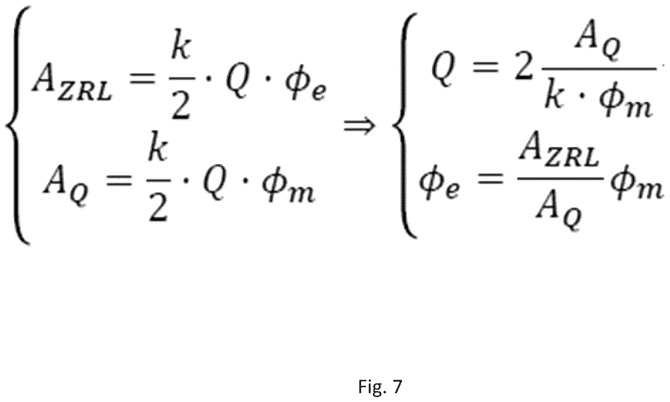

The demodulation signal can be generated using a digital controller, and a look-up table LUT is employed to determine the phase modulation signal to be applied or included in the in-phase demodulation signal. The introduced frequency component signal *Qmeasurement,* is isolated, for example, by filtering (e.g., band-pass filtering), spectral bin extraction (e.g., FFT), digital modulation with $\omega_m$ and low-pass filtering, etc. The amplitude of the isolated signal are measured to provide an indication of the quadrature amplitude. For example, a root-mean-square amplitude, a peak-to-peak amplitude, an envelope amplitude, or a spectral magnitude measurement are employed to measure the indication of the quadrature amplitude $A_Q$, which are used to estimate the quadrature $Q$ and the phase error $\phi_e$, as conceptually illustrated in Figure 7. The $A_{ZRL}$, $A_Q$, $k$, and phase modulation amplitude $\phi_m$ and frequency $\omega_m$ parameters can be imposed or measured, so the quadrature $Q$, including the amplitude and phase, is estimated based on $A_Q$.

To facilitate compensating for quadrature in a gyroscope dynamically, the system 100 of Figure 1 comprises quadrature feedback circuitry 130 including frequency component amplitude estimation circuitry 131. As discussed in more detail below in the descriptions of Figures 5-10, the quadrature feedback circuitry 130 introduces a phase modulation signal with a known frequency and amplitude into the demodulation process, which introduces a frequency component in the in-phase demodulated output having an amplitude proportional to the quadrature amplitude. The amplitude of the introduced frequency component may be used by the quadrature feedback circuitry 130 to generate one or more feedback signals to compensate for the quadrature of the motion signal, including the quadrature amplitude and the phase error. The estimated amplitude of the introduced frequency component may be generated in real time, and thus facilitates accounting for drifts or variance in the quadrature amplitude and phase components over time or due to varying operating conditions dynamically, instead of relying on static, stored values. In addition, as discussed in more detail below, the processing requirements to estimate the amplitude of the introduced frequency component can be significantly lower that the processing requirements of a conventional compensation scheme based on a real time estimation of the amplitude of the quadrature component of the motion signal using separate quadrature demodulation processing chains. For example, in an embodiment, separate Coriolis and quadrature demodulation processing chains are not needed to estimate the amplitude of the quadrature component in real time.

While the quadrature feedback circuitry 130 is illustrated as a separate circuit in Figure 1, in practice it can typically be incorporated into another component, such as an ASIC including one or more sensors of the sensor array 160, such as the gyroscope 162.

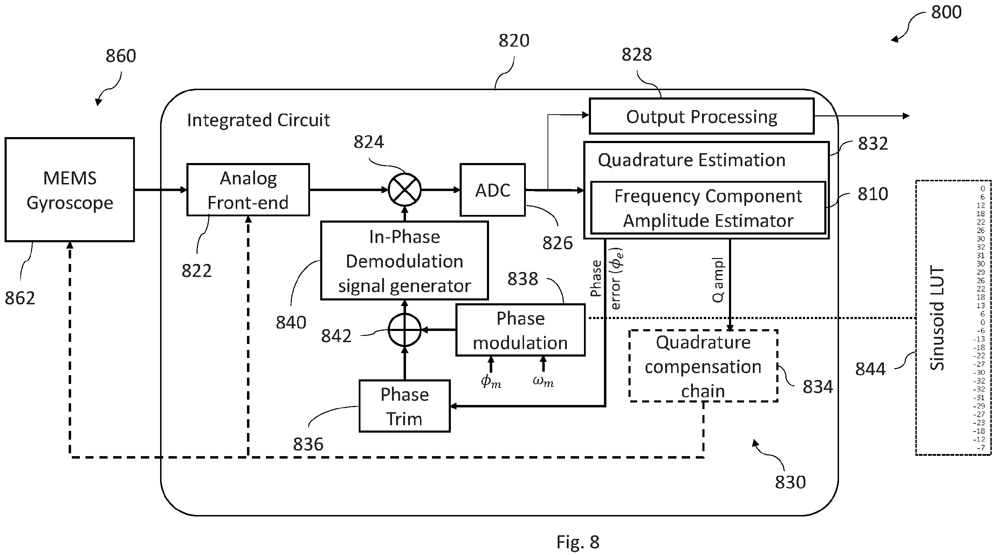

Figure 8 is functional block diagram of an embodiment of a device 800 that can be employed, for example, in the system 100 of Figure 1, to provide all or part of the functionality of the quadrature feedback circuitry 130 and the sensor array 160 of the system 100. The device 800 includes an integrated circuit 820. A sensor array 860 is embedded in or coupled to the integrated circuit 820, and the sensor array 860 includes one or more inertial sensors, as illustrated a MEMS gyroscope 862.

The integrated circuitry 820 includes analog front-end circuitry 822, which, in operation, receives an analog motion signal from the gyroscope 862, and can process the analog motion signal, for example, to compensate for quadrature in the received analog motion signal or to provide other signal pre-processing. For example, a gain or an offset is applied to the analog motion signal by the analog front-end circuitry 822. The integrated circuitry includes an in-phase demodulator 824 which has an input coupled to an output of the analog front-end circuitry 822, and receives the processed analog motion signal from the analog front-end circuitry 822. In operation, the demodulator 824 demodulates the analog motion signal received from the analog front-end circuitry 822 using an in-phase demodulation signal received at a second input of the demodulator 824, producing a demodulated motion signal.

An analog-to-digital converter (ADC) 826 is coupled to an output of the demodulator 824 and, in operation, receives the demodulated motion signal and converts the demodulated motion signal into a digital signal. The digital signal is provided to output processing circuitry 828, which in operation generates a digital output signal based on the digital signal. The digital output signal can be used to generate control signals, for example, to control an application executing on a host processor (see processing core 102 of Figure 1).

The digital signal output by the ADC 826 also is provided to a feedback loop or quadrature feedback circuitry 830. The feedback loop 830 includes quadrature estimation circuitry 832, a quadrature compensation chain 834, phase trim circuitry 836, phase modulation circuitry 838, an in-phase demodulation signal generator 840, an adder 842, and a lookup table (LUT) 844.

The quadrature estimation circuitry 832 includes frequency component amplitude estimation circuitry 810. The amplitude estimation circuitry 810, in operation, isolates an introduced frequency component of the digital demodulated motion signal, which has a frequency $\omega_m$ corresponding to a frequency of a phase modulation signal included in the demodulation signal by the demodulation signal generator 840. The introduced frequency component of the digital demodulated motion signal can be isolated using filtering, spectral bin extraction, digital modulation with low pass filtering, etc., or combinations thereof. The amplitude estimation circuitry 810, in operation, estimates or measures an amplitude of the isolated introduced frequency component signal, for example, by determining a root-mean-square (RMS) magnitude, a peak-to-peak magnitude, an envelope magnitude, a spectral magnitude, etc., or combinations thereof. The quadrature estimator 832 estimates a quadrature amplitude Qampl and a phase error $\phi_e$ based on the estimated amplitude of the introduced frequency component of the isolated signal, for example, based on the relationships discussed above with reference to Figures 5-7. For example, according to:

$$\begin{cases} A_{ZRL} = \dfrac{k}{2} \cdot Q \cdot \phi_e \\[2mm] A_Q = \dfrac{k}{2} \cdot Q \cdot \phi_m \end{cases} \Rightarrow \begin{cases} Q = 2\dfrac{A_Q}{k \cdot \phi_m} \\[2mm] \phi_e = \dfrac{A_{ZRL}}{A_Q} \phi_m \end{cases}$$

where $A_{ZRL}$ corresponds to the phase error $\phi_e$ multiplied by the quadrature component of the signal generated by the gyroscope; $k$ is a constant; $Q$ corresponds to the quadrature amplitude Qampl; $A_Q$ corresponds to the estimated amplitude of the introduced frequency component; $\phi_e$ corresponds to a magnitude of the phase error; and $\phi_m$ corresponds to a magnitude of the phase modulation signal.

The estimated quadrature amplitude Qampl is provided to the quadrature compensation chain 834, which, in operation, generates and provides compensation signals to the analog front end 822 and to the gyroscope 862 to compensate for the quadrature. The analog front end 822, in operation, uses the compensation signals to electrically compensate for the quadrature (e.g., by removing the quadrature from the signal received from the gyroscope 862). The gyroscope 862, in operation, uses the compensation signals to mechanically compensate for the quadrature, for example, by applying compensation signals to compensation electrodes of the gyroscope (see Figures 3 and 4). Other feedback and control signals can be generated by or based on signals generated by the feedback loop, such as a drive signal to drive oscillation of the gyroscope 862.

The estimated phase error $\phi_e$ is provided to the phase trim circuitry, 836, which, in operation, adjusts a phase of the in-phase demodulation signal generated by demodulation signal generator 840 based on the phase error $\phi_e$.

The phase modulation circuitry 838, in operation, generates a phase modulation signal $\phi_m$ to be applied to the demodulation signal generated by the demodulation signal generator. As discussed above with references to Figures 5-7, the application of the phase modulation to the demodulation signal introduces a frequency component in the demodulated signal. The phase modulation signal to be applied is determined, in particular, using a lookup table, such as the lookup table 844, or signal processing circuitry, which returns phase modulation signal waveform with an amplitude $\phi_m$ and a frequency $\omega_m$, to be applied, for example, based on generic periodic or deterministic signal values. The signal waveform, for example, could be sinusoidal, square, triangular, pseudo random, etc. In some embodiments, stored, default or generated values can be employed instead of or in addition to using a LUT. The demodulation signal generator 840 generates a demodulation signal based on the phase error $\phi_e$ and the phase modulation signal. The demodulation signal is used by the demodulator 824 to demodulate the motion signal.

Embodiments of the system 100 of Figure 1 and of the device 800 of Figure 8 can include more components than illustrated, can include fewer components than illustrated, can combine components, can separate components into sub-components, and various combination thereof. For example, the MEMS gyroscope 862 are embedded in the integrated circuit 820 of Figure 8 in some embodiments, the pressure sensor 170 can be omitted from the sensor array 160 of Figure 1 in some embodiments, etc. In some embodiments, a sensor array 160, 860 comprises a combined gyroscope and accelerometer, an inertial measurement unit or device (IMU) package includes an accelerometer, a gyroscope and embedded processing circuitry, which, in operation, implements quadrature compensation scheme(s), etc., and various combinations thereof. In another example, the adder 842 is integrated into the in-phase demodulation signal generator 840.

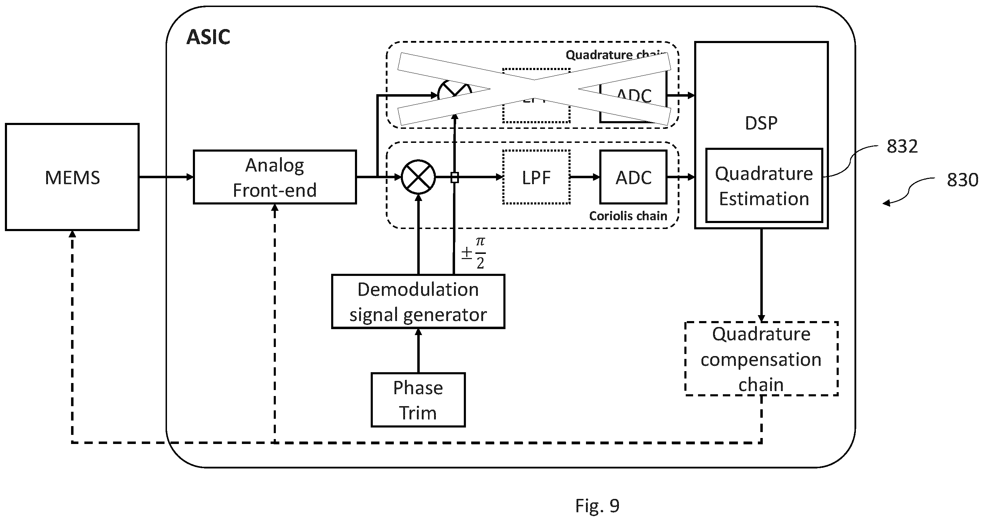

Figure 9 is a conceptual diagram illustrating example advantages of a quadrature compensation system according to an embodiment, and will be described with reference to Figures 1, 4 and 8. The phase modulation amplitude estimation of the quadrature feedback circuitry 830 of Figure 8, including the quadrature estimation circuitry 832, can be inserted into the feedback control circuitry of Figure 4. The phase modulation signal to be applied is provided to the in-phase demodulator to introduce a frequency component into the demodulated signal, and the estimated quadrature amplitude Qampl determined based on the estimated amplitude of the introduced frequency component is employed in the quadrature compensation scheme, eliminating the need for a separate in-quadrature demodulation chain for each axis. The estimated amplitude and phase error based on the estimated amplitude of the introduced frequency component also can be employed in other compensation schemes.

The present invention facilitates providing an all digital solution to compensating for quadrature which is easier to implement and has a lower system complexity than conventional solutions. The present invention facilitates runtime measurement of quadrature amplitude and phase error for multi-axis systems (e.g., a three-axis gyroscope) without system interruption, or time-interleaving, and with increased resistance to external signal disturbances. The system clock can be obtained from the gyroscope oscillations, which facilitates auto-tracking of system frequencies. The estimated amplitude can be immune to offsets. The present invention also facilitates auto-calibration at a test and trim phase of a fabrication process.

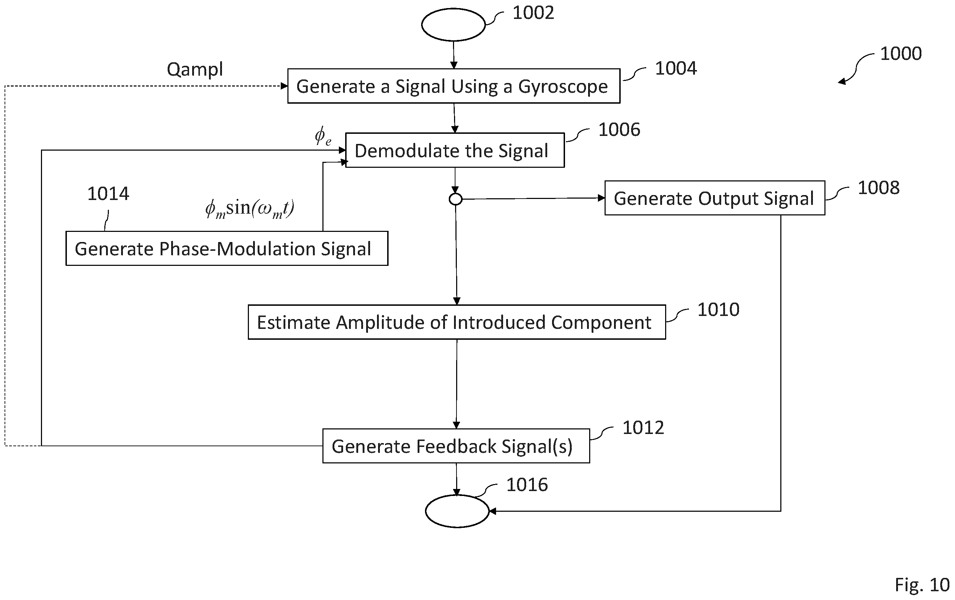

Figure 10 illustrates an embodiment of a method 1000 of compensating for quadrature in a gyroscope, that can be employed by various devices and systems, such as, for example, the system 100 of Figure 1, the device 800 of Figure 8, etc. For convenience, Figure 10 will be described with reference to the system 100 of Figure 1 and the device 800 of Figure 8.

The method 1000 starts at 1002, and proceeds from 1002 to 1004. Although the method 1000 illustrates sequential and parallel processes, the process 1000 is typically be executed as a feedback loop processing sample by sample the sensor data to generate an output signal, and to generate feedback to compensate for quadrature in a received gyroscope signal. In addition, various actions indicated as occurring in sequence in the loop can be performed in parallel or in various sequences.

At 1004, the method 1000 generates a motion signal using a gyroscope. This is done, for example, using the gyroscope 162 of Figure 1 or the gyroscope 862 of Figure 8 in a conventional manner. The method 1000 proceeds from 1004 to 1006.

At 1006, the method 1000 demodulates in-phase the motion signal. This is done, for example, by generating a demodulation signal using the demodulation signal generator 840 and using the demodulation signal to demodulate the motion signal using the demodulator 824, as discussed above with reference to Figure 8. The method 1000 as illustrated proceeds in parallel from 1006 to 1008 and to 1010.

At 1008, the method 1000 generates an output signal based on the demodulated motion signal, such as a signal indicative of one or more rotational velocities sensed by the gyroscope. The output signal is used, for example to generate control signals to control components of or applications executing on the system 100 of Figure 1. The method 1000 proceeds from 1008 to 1016.

At 1010, the method 1000 isolates and estimates an amplitude of a frequency component introduced into the demodulated motion signal. This is done, for example, as discussed above with reference to the frequency component amplitude estimator 810 of Figure 8. The method 1000 proceeds from 1010 to 1012.

At 1012, the method 1000 generates one or more feedback signals based on estimated amplitude of the introduced frequency component, such as a quadrature phase error $\phi_e$ and a quadrature amplitude Qampl. This is done, for example, as discussed above with reference to the quadrature estimator 832 of Figure 8. The quadrature phase error $\phi_e$ is employed during the demodulation at 1006 to compensate for the quadrature in the demodulation process. The quadrature amplitude Qampl is employed during the motion signal generation process 1004 to compensation for the quadrature (e.g., by applying compensation signals to quadrature electrodes in the gyroscope 862, by applying electrical compensation in the analog front-end 822, etc.). The method 1000 proceeds from 1012 to 1016.

At 1014, the method 1000 determines a phase modulation signal $\phi_m\sin(\omega_m t)$ to be applied during the demodulation process 1006 to introduce a frequency component into the demodulated motion signal. This is done, for example, as discussed above with reference to the phase modulation circuitry 838 of Figure 8. The method 1000 proceeds from 1014 to 1006.

At 1016, the method 1000 can perform other processes, such as generating one or more control signals to control a system or device based on the output signal generated at 1008, returns to 1004 to continue processing of a motion signal generated by a gyroscope, etc., and various combinations thereof.

Embodiments of the foregoing processes and methods can contain additional acts not shown in Figure 10, or can not contain all of the acts shown in Figure 10, can perform acts shown in Figure 10 in various orders, can combine acts, or can split acts into separate acts, and can be otherwise modified in various respects. For example, Figure 10 can be modified to combine acts 1010 and 1012, to include an explicit generation of a control signal based on the generated output signal, to include processing of the motion signal prior to the demodulation, etc., and various combinations thereof.

In an embodiment, a device comprises a gyroscope and processing circuitry coupled to the gyroscope. The gyroscope, in operation, generates a signal, the generated signal including a Coriolis component and a quadrature component. The processing circuitry, in operation demodulates the signal generated by the gyroscope using a feedback loop, generating a demodulated signal. The demodulating includes generating an in-phase demodulation signal, demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal, estimating an amplitude of the frequency component corresponding to the phase-modulation signal in the demodulated signal, and generating a feedback signal based on the estimated amplitude of the frequency component corresponding to the phase-modulation signal in the demodulated signal. The processing circuitry compensates for the quadrature component of the signal generated by the gyroscope using the feedback signal, and generates an output signal based on the demodulated signal.

In an embodiment, the phase-modulation signal has a determined frequency and a determined amplitude. In an embodiment, the frequency component corresponding to the phase-modulation signal has the determined frequency of the phase-modulation signal and an amplitude proportional to a magnitude of the quadrature component of the signal generated by the gyroscope. In an embodiment, the generating the feedback signal includes: generating a first feedback signal indicative of the magnitude of the quadrature component of the signal generated by the gyroscope; and generating a second feedback signal indicative of a phase-error in the signal generated by the gyroscope. In an embodiment, the compensating for the quadrature component of the signal generated by the gyroscope includes: applying the first feedback signal to the gyroscope; and using the second feedback signal to generate the in-phase demodulation signal.

In an embodiment, the device comprises: a lookup table, wherein the processing circuitry, in operation, generates the phase-modulation signal signal using the lookup table; a signal generator, wherein the processing circuitry, in operation, generates the phase-modulation signal signal using the signal generator; or a lookup table and a signal generator, wherein the processing circuitry, in operation, generates the phase-modulation signal using the lookup table and the signal generator.

In an embodiment, the processing circuitry, in operation: isolates the frequency component corresponding to the phase-modulation signal in the demodulated signal; and measures the amplitude of the isolated frequency component corresponding to the phase-modulation signal in the demodulated signal. In an embodiment, the isolating the frequency component corresponding to the phase-modulation signal in the demodulated signal comprises: filtering; spectral bin extraction; digital modulation with low pass filtering; or combinations thereof. In an embodiment, the measuring the amplitude comprises measuring: a root-mean-square (RMS) magnitude; a peak-to-peak magnitude; an envelope magnitude; a spectral magnitude; or combinations thereof.

In an embodiment, the gyroscope is a 3-axis gyroscope which, in operation, generates a respective signal for each axis; and the processing circuitry, in operation, simultaneously compensates for respective quadrature components of the respective signals for each axis.

In an embodiment, the device comprises an integrated circuit having the gyroscope and the processing circuitry embedded therein.

In an embodiment, the gyroscope, in operation, generates an analog signal; the processing circuitry comprises an analog-to-digital converter coupled between the gyroscope and the feedback loop, which, in operation, converts the analog signal to a digital signal; and the demodulating comprises demodulating the digital signal.

In an embodiment, the generating the feedback signal includes: generating a first feedback signal indicative of the magnitude of the quadrature component of the signal generated by the gyroscope; and generating a second feedback signal indicative of a phase-error in the signal generated by the gyroscope; and the compensating for the quadrature component of the signal generated by the gyroscope includes: applying the first feedback signal to the gyroscope; and using the second feedback signal to apply a phase-trim to in-phase demodulation signal.

In an embodiment, the phase-modulation signal is: a periodic signal having a period; or a pseudo-random sequence.

In an embodiment, a system comprises a host processor and an integrated circuit coupled to the host processor. The integrated circuit includes: a gyroscope, which, in operation, generates a signal, the generated signal including a Coriolis component and a quadrature component; and processing circuitry coupled to the gyroscope. The processing circuitry, in operation demodulates the signal generated by the gyroscope using a feedback loop, generating a demodulated signal. The demodulating includes: generating an in-phase demodulation signal; demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal; estimating an amplitude of the frequency component corresponding to the phase-modulation signal in the demodulated signal; and generating a feedback signal based on the estimated amplitude of the frequency component corresponding to the phase-modulation signal in the demodulated signal. The processing circuitry compensates for the quadrature component of the signal generated by the gyroscope using the feedback signal, and generates an output signal based on the demodulated signal.

In an embodiment, the phase-modulation signal has a determined frequency and a determined amplitude, and the frequency component corresponding to the phase-modulation signal has the determined frequency of the phase-modulation signal and an amplitude proportional to a magnitude of the quadrature component of the signal generated by the gyroscope. In an embodiment, the generating the feedback signal includes: generating a first feedback signal indicative of the magnitude of the quadrature component of the signal generated by the gyroscope; and generating a second feedback signal indicative of a phase-error in the signal generated by the gyroscope; and the compensating for the quadrature component of the signal generated by the gyroscope includes: applying the first feedback signal to the gyroscope; and using the second feedback signal to apply a phase-trim to in-phase demodulation signal.

In an embodiment, the gyroscope is a 3-axis gyroscope which, in operation, generates a respective signal for each axis; and the processing circuitry, in operation, simultaneously compensates for respective quadrature components of the respective signals for each axis.

In an embodiment, a method includes generating a signal using a gyroscope. The generated signal includes a Coriolis component and a quadrature component. The signal generated by the gyroscope is demodulated using a feedback loop, generating a demodulated signal. The demodulating includes generating an in-phase demodulation signal and demodulating the signal generated by the gyroscope using the generated in-phase demodulation signal. The in-phase demodulation signal includes a phase-modulation signal and the demodulated signal includes a frequency component corresponding to the phase-modulation signal. An amplitude of the frequency component corresponding to the phase-modulation signal in the demodulated signal is estimated, and a feedback signal is generated based on the estimated amplitude of the frequency component corresponding to the phase-modulation signal. Compensation for the quadrature component of the signal generated by the gyroscope is applied based on the feedback signal. An output signal is generated based on the demodulated signal.

In an embodiment, the phase-modulation signal has a determined frequency and a determined amplitude, and the frequency component corresponding to the phase-modulation signal has the determined frequency of the phase-modulation signal and an amplitude proportional to a magnitude of the quadrature component of the signal generated by the gyroscope. In an embodiment, the generating the feedback signal includes: generating a first feedback signal indicative of the magnitude of the quadrature component of the signal generated by the gyroscope; and generating a second feedback signal indicative of a phase-error in the signal generated by the gyroscope; and the compensating for the quadrature component of the signal generated by the gyroscope includes: applying the first feedback signal to the gyroscope; and using the second feedback signal to apply a phase-trim to in-phase demodulation signal.

In an embodiment, the gyroscope is a 3-axis gyroscope which, in operation, generates a respective signal for each axis; and the method includes simultaneously compensating for respective quadrature components of the respective signals for each axis.

In an embodiment, a non-transitory computer-readable medium's contents configure processing circuitry to perform a method, the method comprising: demodulating a signal generated by a gyroscope using a feedback loop, generating a demodulated signal, the signal generated by the gyroscope including a Coriolis component and a quadrature component, wherein the demodulating includes: generating an in-phase demodulation signal; and demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal; estimating an amplitude of the frequency component in the demodulated signal corresponding to the phase-modulation signal; and generating a feedback signal based on the estimated amplitude of the frequency component in the demodulated signal corresponding to the phase-modulation signal; compensating for the quadrature component of the signal generated by the gyroscope using the feedback signal; and generating an output signal based on the demodulated signal. In an embodiment, the contents comprise instructions executable by processing circuitry.

In an embodiment, the generating the feedback signal includes: generating a first feedback signal indicative of the magnitude of the quadrature component of the signal generated by the gyroscope; and generating a second feedback signal indicative of a phase-error in the signal generated by the gyroscope; and the compensating for the quadrature component of the signal generated by the gyroscope includes: applying the first feedback signal to the gyroscope; and using the second feedback signal to apply a phase-trim to in-phase demodulation signal.

Some embodiments take the form of or comprise computer program products. For example, according to one embodiment there is provided a computer readable medium comprising a computer program adapted to perform one or more of the methods or functions described above. The medium is for example a physical storage medium, such as for example a Read Only Memory (ROM) chip, or a disk such as a Digital Versatile Disk (DVD-ROM), Compact Disk (CD-ROM), a hard disk, a memory, a network, or a portable media article to be read by an appropriate drive or via an appropriate connection, including as encoded in one or more barcodes or other related codes stored on one or more such computer-readable mediums and being readable by an appropriate reader device.

Furthermore, in some embodiments, some or all of the methods and/or functionality are implemented or provided in other manners, such as at least partially in firmware and/or hardware, including, but not limited to, one or more application-specific integrated circuits (ASICs), digital signal processors, discrete circuitry, logic gates, standard integrated circuits, controllers (e.g., by executing appropriate instructions, and including microcontrollers and/or embedded controllers), field-programmable gate arrays (FPGAs), complex programmable logic devices (CPLDs), etc., as well as devices that employ RFID technology, and various combinations thereof.

The various embodiments described above can be combined to provide further embodiments. These and other changes can be made to the embodiments in light of the above-detailed description.

**Claims**

1. A device (800), comprising:

a gyroscope (862) configured to generate (1004) a signal that includes a Coriolis component and a quadrature component; and

processing circuitry (820) coupled to the gyroscope,

the processing circuitry being configured to:

- demodulate (1006) the signal generated by the gyroscope using a feedback loop, generating a demodulated signal, the demodulating including:

generating (1014, 840) an in-phase demodulation signal,

demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal,

estimating (1010, 810) an amplitude of the frequency component corresponding to the phase-modulation signal in the demodulated signal, and

generating (1012) a feedback signal based on the estimated amplitude of the frequency component corresponding to the phase-modulation signal in the demodulated signal;

- compensate (834) for the quadrature component of the signal generated by the gyroscope using the feedback signal; and

- generate (1008, 828) an output signal based on the demodulated signal.

2. The device of claim 1, wherein the frequency component corresponding to the phase-modulation signal has the determined frequency of the phase-modulation signal and an amplitude proportional to a magnitude of the quadrature component of the signal generated by the gyroscope.

3. The device of claim 2, wherein the generating the feedback signal includes:

generating a first feedback signal indicative of the magnitude of the quadrature component of the signal generated by the gyroscope; and

generating a second feedback signal indicative of a phase-error in the signal generated by the gyroscope,

and wherein the compensating for the quadrature component of the signal generated by the gyroscope includes:

applying the first feedback signal to the gyroscope; and

using the second feedback signal to generate the in-phase demodulation signal.

4. The device of anyone of claims 1-3, comprising:

a lookup table, wherein the processing circuitry is further configured to generate the phase-modulation signal signal using the lookup table; or

a signal generator, wherein the processing circuitry is further configured to generate the phase-modulation signal signal using the signal generator; or

a lookup table and a signal generator, wherein the processing circuitry is further configured to generate the phase-modulation signal using the lookup table and the signal generator.

5. The device of anyone of claims 1-4, wherein the processing circuitry is further configured to:

isolate the frequency component corresponding to the phase-modulation signal in the demodulated signal; and

measure the amplitude of the isolated frequency component corresponding to the phase-modulation signal in the demodulated signal.

6. The device of claim 5 wherein the isolating the frequency component corresponding to the phase-modulation signal in the demodulated signal comprises:

filtering;

spectral bin extraction;

digital modulation with low pass filtering; or

combinations thereof,

and wherein the measuring the amplitude comprises measuring:

a root-mean-square, RMS, magnitude;
a peak-to-peak magnitude;
an envelope magnitude;
a spectral magnitude; or
combinations thereof.

7. The device of anyone of claims 1-6, wherein,

the gyroscope is a 3-axis gyroscope configured to generate a respective signal for each axis; and
the processing circuitry is further configured to simultaneously compensate for respective quadrature components of the respective signals for each axis.

8. The device of anyone of claims 1-7, wherein,

the gyroscope is configured to generate an analog signal;
the processing circuitry comprises an analog-to-digital converter coupled between the gyroscope and the feedback loop, which is configured to convert the analog signal to a digital signal; and
the demodulating comprises demodulating the digital signal.

9. The device of anyone of claims 1-8, wherein,

the generating the feedback signal includes:

generating a first feedback signal indicative of the magnitude of the quadrature component of the signal generated by the gyroscope; and
generating a second feedback signal indicative of a phase-error in the signal generated by the gyroscope; and

the compensating for the quadrature component of the signal generated by the gyroscope includes:

applying the first feedback signal to the gyroscope; and
using the second feedback signal to apply a phase-trim to in-phase demodulation signal.

10. The device of claim 1, wherein the phase-modulation signal has a determined frequency and a determined amplitude, is a periodic signal having a period or a pseudo-random sequence.

11. A system, comprising:

a host processor (102); and
an integrated circuit (820) coupled to the host processor, the integrated circuit including a device (800) according to anyone of claims 1-10.

12. A method (1000), comprising:

generating (1004), using a gyroscope, a signal, the generated signal including a Coriolis component and a quadrature component;
demodulating (1006) the signal generated by the gyroscope using a feedback loop, generating a demodulated signal, the demodulating including:

generating (1014) an in-phase demodulation signal; and
demodulating the signal generated by the gyroscope using the generated in-phase demodulation signal, generating a demodulated signal, wherein, the in-phase demodulation signal includes a phase-modulation signal and the demodulated signal includes a frequency component corresponding to the phase-modulation signal;
estimating (1010) an amplitude of the frequency component corresponding to the phase-modulation signal in the demodulated signal; and

generating (1012) a feedback signal based on the estimated amplitude of the frequency component corresponding to the phase-modulation signal in the demodulated signal;

compensating for the quadrature component of the signal generated by the gyroscope using the feedback signal; and

generating (1008) an output signal based on the demodulated signal.

13. The method of claim 12, wherein,

the phase-modulation signal has a determined frequency and a determined amplitude, and
the frequency component corresponding to the phase-modulation signal has the determined frequency of the phase-modulation signal and an amplitude proportional to a magnitude of the quadrature component of the signal generated by the gyroscope.

14. The method of claim 13, wherein,

the generating the feedback signal includes:

generating a first feedback signal indicative of the magnitude of the quadrature component of the signal generated by the gyroscope; and
generating a second feedback signal indicative of a phase-error in the signal generated by the gyroscope; and

the compensating for the quadrature component of the signal generated by the gyroscope includes:

applying the first feedback signal to the gyroscope; and
using the second feedback signal to apply a phase-trim to in-phase demodulation signal.

15. A computer-readable medium having contents adapted to configure a processing circuitry to perform the method (1000) of anyone of claims 12-14.

100

130

Quadrature Feedback
Circuitry

131

Frequency Component
Amplitude Estimator

160

104

Memories

Image Sensor(s) — 166

Temperature
Sensor(s) — 172

Accelerometer(s) — 164

Pressure Sensors(s) — 170

Gyroscope(s) — 162

Audio Sensor(s) — 168

190

Display(s) — 106

Processing
Core(s) — 102

Interface(s) — 180

Other
Functional
Circuit(s) — 185

Fig. 1

$$C \cdot \sin(\omega_d t) + Q \cdot \cos(\omega_d t)$$

$$k \cdot \sin(\omega_d t + \phi_e)$$

$$\frac{k}{2}C \cdot \cos(\phi_e) - \frac{k}{2}C \cdot \cos(2\omega_d t + \phi_e) \rightarrow \text{filtered}$$

$$+ \frac{k}{2}Q \cdot \sin(\phi_e) + \frac{k}{2}Q \cdot \sin(2\omega_d t + \phi_e) \rightarrow \text{filtered}$$

$$OUT \cong \underbrace{\frac{k}{2} \cdot C}_{\substack{Coriolis \\ Signal}} + \underbrace{\frac{k}{2} \cdot Q \cdot \phi_e}_{ZRL\ (A_{ZRL})}$$

Fig. 2

Fig. 3

EP 4 624 868 A1

Fig. 4

$$C \cdot \sin(\omega_d t) + Q \cdot \cos(\omega_d t) \xrightarrow{\otimes}$$

$$k \cdot \sin(\omega_d t + \phi_e + \phi_m \cdot \sin(\omega_m t))$$

$$\frac{k}{2} C \cdot \cos(\phi_e + \phi_m \cdot \sin(\omega_m t)) - \frac{k}{2} C \cdot \cos(2\omega_d t + \phi_e + \phi_m \cdot \sin(\omega_m t)) \blacktriangleright \text{filtered}$$

$$+ \frac{k}{2} Q \cdot \sin(\phi_e + \phi_m \cdot \sin(\omega_m t)) + \frac{k}{2} Q \cdot \sin(2\omega_d t + \phi_e + \phi_m \cdot \sin(\omega_m t)) \blacktriangleright \text{filtered}$$

$$OUT \cong \underbrace{\frac{k}{2} \cdot C}_{\substack{Coriolis \\ Signal}} + \underbrace{\frac{k}{2} \cdot Q \cdot \phi_e}_{ZRL\,(A_{ZRL})} + \underbrace{\overbrace{\frac{k}{2} \cdot Q \cdot \phi_m}^{A_Q} \cdot \sin(\omega_m t)}_{Q\ measurement\ signal}$$

Fig. 5

EP 4 624 868 A1

Fig. 6

$$\left\{ \begin{array}{l} A_{ZRL} = \dfrac{k}{2} \cdot Q \cdot \phi_e \\[2ex] A_Q = \dfrac{k}{2} \cdot Q \cdot \phi_m \end{array} \right\} \Rightarrow \left\{ \begin{array}{l} Q = 2\dfrac{A_Q}{k \cdot \phi_m} \\[2ex] \phi_e = \dfrac{A_{ZRL}}{A_Q}\phi_m \end{array} \right\}$$

Fig. 7

Fig. 8

Fig. 9

EP 4 624 868 A1

Fig. 10

EP 4 624 868 A1

**EP 4 624 868 A1**

## EUROPEAN SEARCH REPORT

Application Number

EP 25 16 3706

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/328712 A1 (COLLIN RAULI [FI] ET AL) 16 November 2017 (2017-11-16) * paragraphs [0020] - [0041], [0086] - [0088], [0131] - [0138] * ----- | 1-15 | INV. G01C19/5776 G01C25/00 G01C19/56 |
| A | US 2023/068616 A1 (GUERINONI LUCA [IT] ET AL) 2 March 2023 (2023-03-02) * paragraphs [0042] - [0046], [0065], [0066] * ----- | 1-15 | |
| X,P | WANG JIANPENG ET AL: "An In-Run Automatic Demodulation Phase Error Compensation Method for MEMS Gyroscope in Full Temperature Range", MICROMACHINES (BASEL), vol. 15, no. 7, 26 June 2024 (2024-06-26), page 825, XP093292377, Switzerland ISSN: 2072-666X, DOI: 10.3390/mi15070825 * sections 1,2,3; figure 4 * ----- | 1-15 | |

TECHNICAL FIELDS SEARCHED (IPC)

G01C

The present search report has been drawn up for all claims

| Place of search | Date of completion of the search | Examiner |
|---|---|---|
| The Hague | 7 July 2025 | Gagin, Thibaut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 3706

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2025

| Patent document cited in search report | Publication date | Patent family member(s) | | Publication date |
|---|---|---|---|---|
| US 2017328712 A1 | 16-11-2017 | CN | 107367271 A | 21-11-2017 |
| | | EP | 3249357 A1 | 29-11-2017 |
| | | JP | 6406389 B2 | 17-10-2018 |
| | | JP | 2017223659 A | 21-12-2017 |
| | | KR | 20170127375 A | 21-11-2017 |
| | | US | 2017328712 A1 | 16-11-2017 |
| US 2023068616 A1 | 02-03-2023 | CN | 115900677 A | 04-04-2023 |
| | | EP | 4148382 A1 | 15-03-2023 |
| | | US | 2023068616 A1 | 02-03-2023 |
| | | US | 2023280189 A1 | 07-09-2023 |

EPO FORM P0459

For more details about this annex : see Official Journal of the European Patent Office, No. 12/82